# EUROPEAN PATENT SPECIFICATION

(11) **EP 4 647 897 B1**
(45) Date of publication and mention of the grant of the patent: **19.08.2026**
(21) Application number: 24212078.0
(22) Date of filing: 11.11.2024
(51) Int. Cl.: G06F 8/36, G06F 8/70

(54) **COMPUTER-IMPLEMENTED METHOD FOR BUILDING SUPER APPLICATION, COMPUTER PROGRAM AND COMPUTER-READABLE DATA CARRIER**
COMPUTERIMPLEMENTIERTES VERFAHREN ZUM AUFBAU EINER SUPERANWENDUNG, COMPUTERPROGRAMM UND COMPUTERLESBARER DATENTRÄGER
PROCÉDÉ MIS EN UVRE PAR ORDINATEUR POUR CONSTRUIRE UNE SUPER APPLICATION, PROGRAMME INFORMATIQUE ET SUPPORT DE DONNÉES LISIBLE PAR ORDINATEUR

(30) Priority: 08.05.2024 TW 113117056
(43) Date of publication of application: 12.11.2025
(73) Proprietor: Tatung University, Taipei 104 (TW)
(72) Inventor: Cheng, Fu-Chiung, Taipei City 106016 (TW); Wang, Dai-Xin, Taipei City 103022 (TW); Liu, Wei-Cheng, New Taipei City 231006 (TW)
(74) Representative: Ter Meer Steinmeister & Partner

(56) References cited:
- CN-A- 117 850 978
- CARVALHO OTA FERNANDO KAWAY ET AL: "A Decentralized Super App", 2023 24TH IEEE INTERNATIONAL CONFERENCE ON MOBILE DATA MANAGEMENT (MDM), IEEE, 3 July 2023 (2023-07-03), pages 81 - 88, XP034403983, DOI: 10.1109/MDM58254.2023.00024

## Description

### BACKGROUND

### Technical Field

The disclosure relates to a computer-implemented method of building an application (APP), and in particular, to a computer-implemented method of building a super application (Super APP) as well as a computer program, and a computer-readable data carrier (storage).

### Description of Related Art

An application is a computer program that comprises computer code means, such as computer instructions means, for carrying out computer code, such as one or more computer instructions, when the application is executed by an electronic (computing) device, such as personal computers, notebook computers, servers, having a processor and a storage (data carrier), the processor being coupled to the storage. The application provides a single service to meet a single need of a user.

A super application (Super APP) refers to an application that provides multiple services in one application (APP) and meets multiple needs of users, thus achieving a one-stop solution. A super APP is created by accumulating various functions into the same APP.

However, it is currently not possible to easily import existing APP combinations (plurality of single APPs) to form a super APP. The current method of APP development is not easy to directly modularize single APPs and integrate these modularized APPs into other APP projects.

It is usually required to create modules independently or use the functions provided by JavaScript tool libraries (such as Lib) for development.

In addition, when integrating third-party services, users might also encounter reliability and security issues, and might also be subject to changes in the third-party application programming interface (API).

The publication "A Decentralized Super App", 2023 24TH IEEE International Conference on Mobile Data Management (MDM) IEEE, 3 July 2023, discloses a decentralized super app architecture that addresses the technical problem of centralized data control in existing super apps. The document states that "the super app owner retains high control of users' data" and "the extension of the damage caused by a massive leakage or malicious data control in a super app environment would be tremendous, ranging from compromising personal documents up to the manipulation of public opinion in presidential elections. The author proposes a complete decentralized architecture to: 1) Prevent that a single owner of the infrastructure control the whole users' datasets; 2) Provide a full log of data access between the stakeholders; 3) Allow member apps to create their own interaction experience to be plotted at users' screens; 4) Publicly dynamically attest all the member apps programming interfaces within the super app. The proposed solution addresses privacy concerns by implementing a complete auditable decentralised super app architecture where any auditing or inspecting entity can request evidence to be presented about what data was requested from the user and who had access to it.

### SUMMARY

The present disclosure solves the above address problems with the features of the independent claims. Advantageous embodiments can be derived from respective dependent claims.

The present disclosure provides a computer-implemented method, a computer program and computer readable data carrier for building a super application (hereafter short super APP) to enable developers to easily construct and manage multiple applications (hereafter short APP) on a single platform while ensuring a high degree of interoperability of the APPs.

The computer-implemented method of building a super APP in the disclosure is adaptable for using a processor to execute the method. The method includes: a first super APP is created through an APP development tool, in which the first super APP includes multiple first APPs, and the multiple first APPs include a main APP and at least one slave APP. The steps to create the first super APP include: the main APP is selected through the APP development tool; in response to the main APP selected, an information transfer manager and a background application programming interface (API) executor are created in the main APP; with the main APP selected through the APP development tool, at least one of the slave APPs is selected through the APP development tool; a transmission path between the main APP and each of the slave APPs is created through the information transfer manager; and a call association between the main APP and a background API executable master file of each of the slave APPs is created through the background API executor.

In an embodiment of the disclosure, the steps of creating the transmission path between the main APP and each of the slave APPs through the information transfer manager includes: a directory path corresponding to each of the slave APPs in the main APP is created through the information transfer manager; and each of the slave APPs is stored in the directory path corresponding to each of the slave APPs, so that the information transfer manager stores the data content transmitted individually by the main APP and each of the slave APPs through the directory path, and allows the main APP and each of the slave APPs to read the data content stored in the directory path.

In an embodiment of the disclosure, in a condition where the APP development tool starts the main APP, after the APP development tool selects the slave APPs, an object corresponding to each of the slave APPs may be further added to a designated page of the first super APP, and the object may be associated with the directory path of the corresponding slave APP.

In an embodiment of the disclosure, in a condition where the APP development tool selects the main APP, the method further includes: a second super APP is selected through the APP development tool, in which the second super APP includes multiple second APPs, and one of the multiple second APPs is a main APP of the second super APP; and the second super APP is imported into the first super APP, so that the multiple second APPs comprised in the second super APP become the slave APPs of the first super APP. The steps include: a transmission path between the main APP of the first super APP and each of the multiple second APPs of the second super APP is created through the information transfer manager of the first super APP; and a call association between the main APP of the first super APP and the background API executable master file of each of the multiple second APPs of the second super APP is created through the background API executor of the first super APP.

In an embodiment of the disclosure, the background API executor is configured to call the background API executable master file of each of the slave APPs.

In an embodiment of the disclosure, the steps of creating the transmission path between the main APP of the first super APP and each of the multiple second APPs of the second super APP through the information transfer manager of the first super APP include: a directory path corresponding to each of the multiple second APPs is created in the main APP of the first super APP through the information transfer manager; and each of the multiple second APPs is stored in the directory path corresponding to each of the multiple second APPs.

In an embodiment of the disclosure, the background API executor is configured to call the background API executable master file of each of the slave APPs.

In an embodiment of the disclosure, the said method of building a super application further includes: a background management function is added to the first super APP through the APP development tool.

In an aspect of the present disclosure there is further provided a computer program comprising program code means for carrying out the above-described method, when the program is executed on an electronic device.

In an aspect of the present disclosure there is further provided a computer-readable data carrier (storage) that comprises program code executable by an electronic device, e.g. a processor thereof, so that the electronic device executes the above-described method. Data carrier may include any internal or external storage means, such as USB-storage, flash memory, or any other suitable form to store computer-readable data.

Based on the above, when designing a super APP, users may combine existing APPs with new APPs to form a brand new super APP. The APPs in the super APP can transfer data to each other or call API functions. In addition, one or more new APPs may be added to the existing super APP and expand the existing super APP into a new super APP.

### BRIEF DESCRIPTION OF THE DRAWINGS

FIG. 1 is a schematic architectural diagram of an application according to an embodiment of the disclosure.
FIG. 2 is a schematic diagram of a super application architecture according to an embodiment of the disclosure.
FIG. 3 is a flowchart of a method for building a super application according to an embodiment of the disclosure.
FIG. 4 is an architectural schematic diagram of a transmission path in a super APP according to an embodiment of the disclosure.
FIG. 5 is an architectural schematic diagram of call associations in a super APP according to an embodiment of the disclosure.
FIG. 6 is an architectural schematic diagram of integrating multiple super APPs according to an embodiment of the disclosure.
FIG. 7A, FIG. 7B, and FIG. 7C are schematic interface diagrams of an APP development tool according to an embodiment of the disclosure.
FIG. 8 is a schematic diagram of a membership page of a super APP according to an embodiment of the disclosure.
FIG. 9 is a schematic diagram of an APP list page of a super APP according to an embodiment of the disclosure.

### DESCRIPTION OF THE EMBODIMENTS

In the following embodiments, any electronic device with computing capabilities may be configured to implement a method of building a super application. Electronic devices may be, for example, personal computers, notebook computers, servers, etc. The said electronic device at least includes a processor and a storage, and the processor is coupled to the storage. The storage may be a data carrier as introduced above.

The processor may be a central processing unit (CPU), a physical processing unit (PPU), a programmable microprocessor, an embedded control chip, or a digital signal processor (DSP), an application specific integrated circuits (ASIC) or other similar devices.

The storage may be any type of fixed or removable random access memory (RAM), read-only memory (ROM), flash memory, hard disk or other similar devices or a combination of these devices. The storage includes one or more code fragments, which, after one or more code fragments mentioned are installed, are executed by the processor to implement the method of building the super application (Super APP).

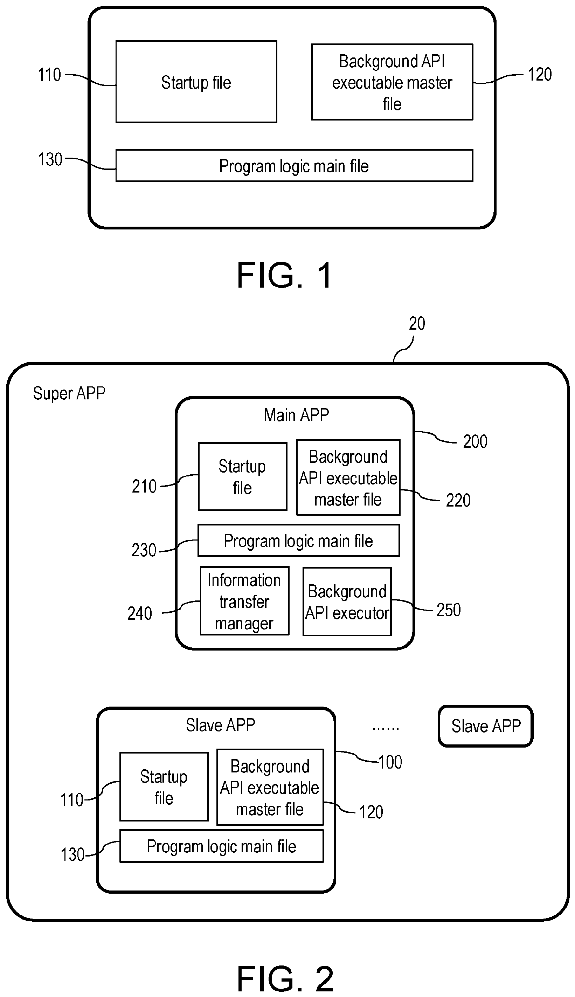

FIG. 1 is a schematic architectural diagram of an application according to an embodiment of the disclosure. Please refer to FIG. 1. In an embodiment, an application (APP) includes a startup file 110, a background application programming interface (API) executable master file 120, and a program logic main file 130. For example, the startup file 110 is an "index.html" file, which is responsible for starting the APP, setting parameters, etc. The program logic main file 130 is a function file that is actually executed, which includes one or more pages. Each page includes functions (such as API functions) and variables. The program logic main file 130 is, for example, a ".vue" or ".js" file. The background API executable master file 120 is a main file configured to allow API functions to be executed in the background. The background API executable master file 220 is, for example, a ".vue" or ".js" file. In an embodiment, the background API executable master file 120 may be an API function, such as "Web Work," which can be independently executed in the background without affecting the original HTML page.

The super application (Super APP) imports multiple APPs to provide services, and each APP can be regarded as a website service created on a mobile phone. For example, the super APP can provide services such as communication, e-commerce, shopping, ordering, travel, taxi hailing, remittance, etc. Each service is provided by an APP.

FIG. 2 is a schematic diagram of a super application architecture according to an embodiment of the disclosure. In this embodiment, a super APP 20 is created through an application (APP) development tool. Referring to FIG. 2, the super APP 20 is composed of multiple APPs, one of which serves as a main APP 200, and the other APPs are regarded as slave APPs 100. When the super APP 20 is started, the first APP to be started is the main APP 200. The architecture of the slave APPs 100 is the same as the architecture shown in FIG. 1. The architecture of the main APP 200 is similar to the architecture of the slave APPs 100, and includes a startup file 210, a background API executable master file 220, and a program logic main file 230, and further includes an information transfer manager 240 and a background API executor 250. The information transfer manager 240 is, for example, a web page storage area such as "localStorage" or "sessionStorage". The information transfer manager 240 is responsible for storing the data content transmitted by each APP in the super APP. Moreover, each APP may read the data content transmitted by other APPs through the information transfer manager 240. The background API executor 250 is, for example, a function, a program code fragment, etc., which is configured to enable the main APP to call the slave APPs to execute in the background.

In order to improve security, the information transfer manager 240 may further perform encryption and decryption operations on the received data content.

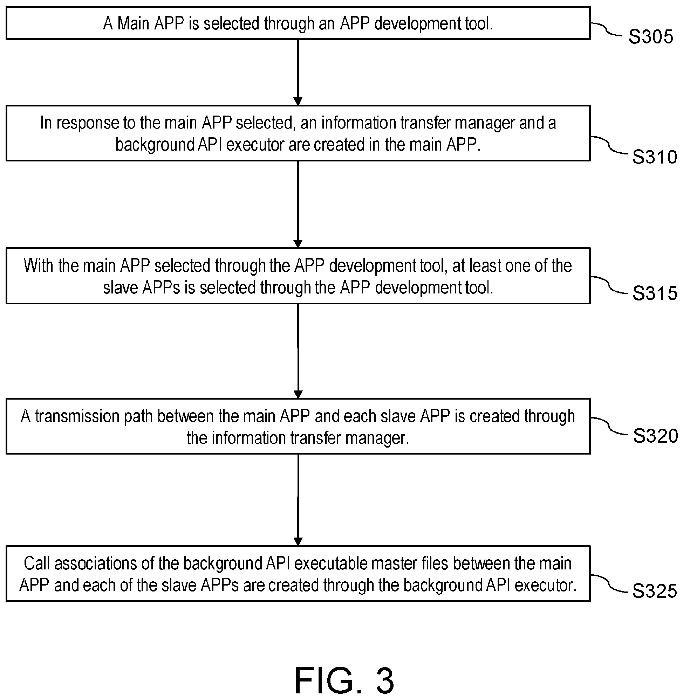

The following examples further illustrate each step of building the super APP 20. FIG. 3 is a flowchart of a method for building the super application according to an embodiment of the disclosure. Please refer to FIG. 2 and FIG. 3. In Step S305, the main APP 200 is selected through the APP development tool. For example, in an embodiment, a user can select one of the APP projects as the main APP 200 through the APP development tool.

Next, in Step S310, in response to the main APP 200 selected, the information transfer manager 240 and the background API executor 250 are created in the main APP 200. In Step S315, when the APP development tool selects the main APP 200, at least one slave APP 100 is selected through the APP development tool.

In Step S320, a transmission path between the main APP 200 and each of the slave APPs 100 is created through the information transfer manager 240. Specifically, the information transfer manager 240 creates a directory path corresponding to each of the slave APPs 100 in the main APP 200, and store each of the slave APPs 100 in the directory path corresponding to each of the slave APPs 100, so that the information transfer manager 240 can store the data content transmitted respectively by the main APP 200 and each of the slave APPs 100 through the directory path, and allows the main APP 200 and each of the slave APPs 100 to read the data content stored in the directory path. Since each of the slave APPs 100 is placed in the directory path corresponding to each of the slave APPs 100 in the main APP 200, when the directory path of the startup file 210 is accessed, the slave APPs 100 corresponding to the directory path is executed.

For example, assuming that the location path of the main APP 200 is: "file://xxx/www/," the path corresponding to the startup file 210 of the main APP 200 (for example, the file of "index.html") is "file://xxx/www/index.html." When the super APP 20 is started, the startup file 210 of the main APP 200 can be executed by "file://xxx/www/index.html." In addition, assuming that the directory path corresponding to the slave APP 100 is set with the name "APP1" of the slave APP 100, under the location path corresponding to the main APP 200, the directory path of the slave APP 100 is set to be "file://xxx/www/APP1/," and the directory path corresponding to the startup file 110 of the slave APP 100 (for example, the file of "index.html") is "file://xxx/www/APP1/index.html." The main APP 200 can execute the startup file 110 of the slave APP 100 from "file://xxx/www/APP1/index.html."

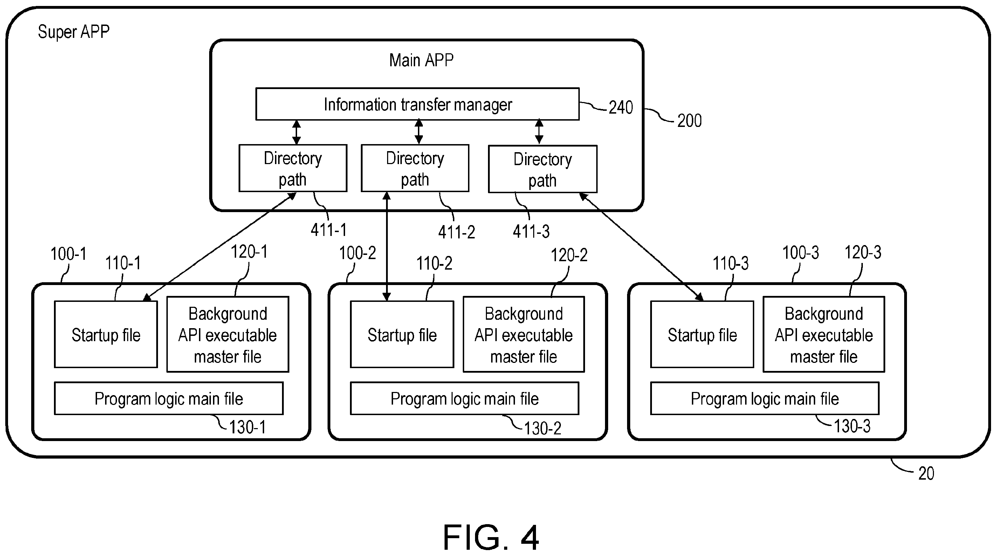

FIG. 4 is an architectural schematic diagram of a transmission path in a super APP according to an embodiment of the disclosure. Please refer to FIG. 4. This embodiment lists three slave APPs (100-1, 100-2, 100-3) to illustrate, but the disclosure is not limited thereto. There may be four slave APPs, five slave APPs, ten slave Apps, twenty slave Apps and so on. The slave APP 100-1 includes a startup file 110-1, a background API executable master file 120-1, and a program logic main file 130-1. The slave APP 100-2 includes a startup file 110-2, a background API executable master file 120-2, and a program logic main file 130-2. The slave APP 100-3 includes a startup file 110-3, a background API executable master file 120-3, and a program logic main file 130-3. The main APP 200 creates directory paths 411-1, 411-2, and 411-3 corresponding to the three slave APPs 100-1, 100-2, and 100-3 through the information transfer manager 240. The slave APP 100-1 is stored in directory path 411-1, the slave APP 100-2 is stored in directory path 411-2, and the slave APP 100-3 is stored in directory path 411-3.

Returning to FIG. 3, in Step S325, call associations of the background API executable master files 120 between the main APP 200 and each of the slave APPs 100 (for example, the slave APPs 100-1, 100-2, and 100-3) are created through the background API executor 250. Accordingly, the main APP 200 can call the background API executable master file 120 of the slave APP 100 through the background API executor 250 when needed.

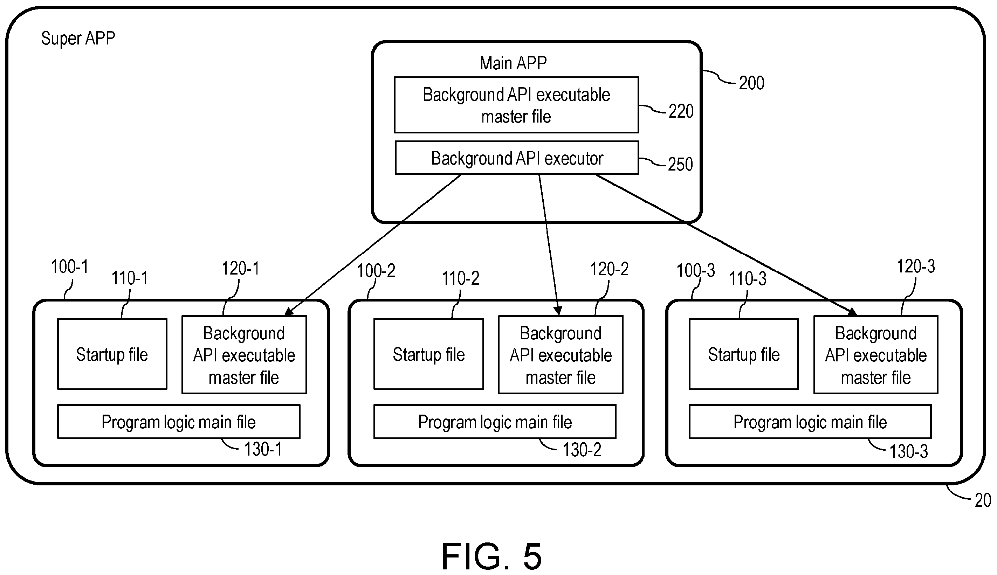

FIG. 5 is an architectural schematic diagram of call associations in a super APP according to an embodiment of the disclosure. Please refer to FIG. 5. This embodiment illustrates three slave APPs 100-1, 100-2, and 100-3 (which can be collectively referred to as the slave APPs 100), but the disclosure is not limited to the number of slave APPS. As shown in FIG. 5, the background API executor 250 of the main APP 200 calls the background API executable master files 120-1, 120-2, and 120-3 of each of the slave APPs 100-1, 100-2, 100-3 (which can be collectively referred to as the background API executable master file 120).

When the super APP 20 is started, it executes the startup file 210 of the main APP 200. The startup file 210 first executes the program logic main file 230. When at least one slave APP 100 is executed in the background (such as at least one of the slave APPs 100-1, 100-2, and 100-3), the background API executor 250 is configured to call the background API executable master file 120 of one or more slave APPs 100 to be executed in the background.

In addition, besides being combined with one or more APPs, the super APP 20 may also be combined with other super APPs. When the super APP 20 is combined with other super APPs, the integrated super APP is regarded as a normal APP, and the information transfer manager and the background API executor of its own main APP is canceled (for example, the information transfer manager and the background API executor of the main APP of the integrated super APP is disabled), replaced by the super APP 20 as the leader. The following example illustrates the structure of importing a super APP into another super APP 20.

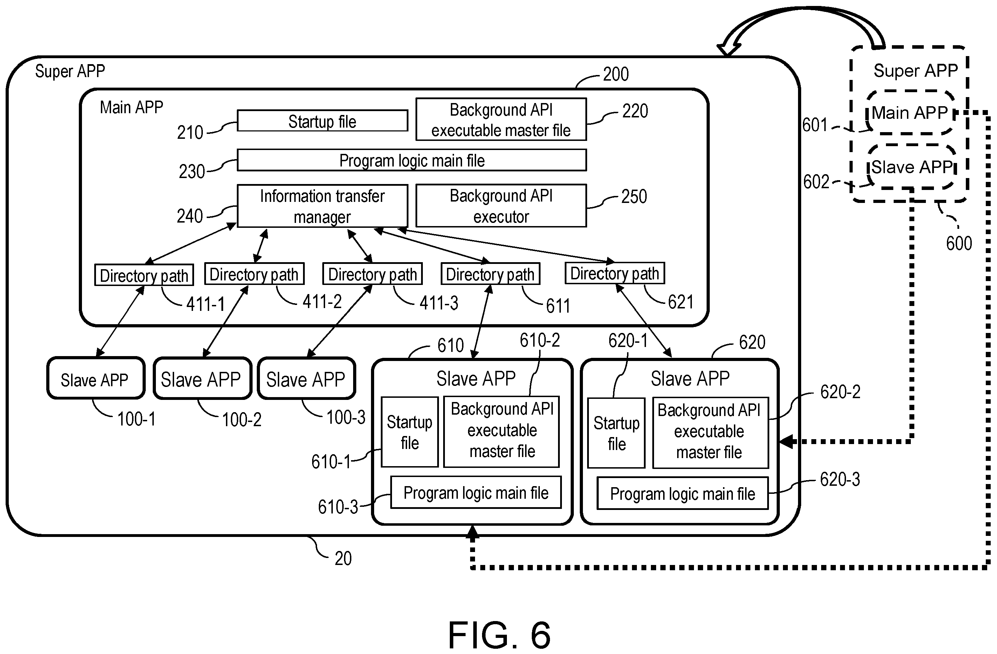

FIG. 6 is an architectural schematic diagram of integrating multiple super APPs according to an embodiment of the disclosure. Please refer to FIG. 6. In this embodiment, a super APP 600 (second super APP) is selected through the APP development tool. The super APP 600 includes multiple APPs (two APPs are listed here, but the disclosure is not limited thereto), one of which being the main APP 601 and the other being the slave APP 602. Then, the super APP 600 is imported into the super APP 20 (first super APP), so that the second APP (the main APP 601 and the slave APP 602) included in the super APP 600 becomes the slave APPs 610 and 620 of the super APP 20.

In other words, after the super APP 600 is imported into the super APP 20, the original information transfer manager and the background API executor of the main APP 601 of the super APP 600 (corresponding to the slave APP 610) are disabled and not able to operate, and instead the information transfer manager 240 and the background API executor 250 of the super APP 20 are configured to control the slave APP 610 and the slave APP 620.

Specifically, the information transfer manager 240 of the super APP 20 creates a transmission path between the main APP 200 of the super APP 20 and each secondary APP (the main APP 601, the slave APP 602) of the super APP 600. As shown in FIG. 6, in the main APP 200, the directory paths 611 and 621 corresponding to the main APP 601 and the slave APP 602 of the super APP 600 are created through the information transfer manager 240, and the main APP 601 is stored in the directory path 611, and the slave APP 602 is stored in the directory path 621. Accordingly, the main APP 601 and the slave APP 602 of the super APP 600 become the slave APP 610 and APP 620 of the super APP 20 respectively. The slave APP 610 includes a startup file 610-1, a background API executable master file 610-2, and a program logic main file 610-3. The slave APP 620 includes a startup file 620-1, a background API executable master file 620-2, and a program logic main file 620-3.

Furthermore, the background API executor 250 of the super APP 20 creates the call associations between the background API executable master files 610-2 and 620-2 of the main APP 200 of the super APP 20 and the slave APPs 610 and 620 of the super APP 600. Accordingly, the main APP 200 may execute at least one of the slave APP 610 and the slave APP 620 in the background through the background API executor 250 when needed.

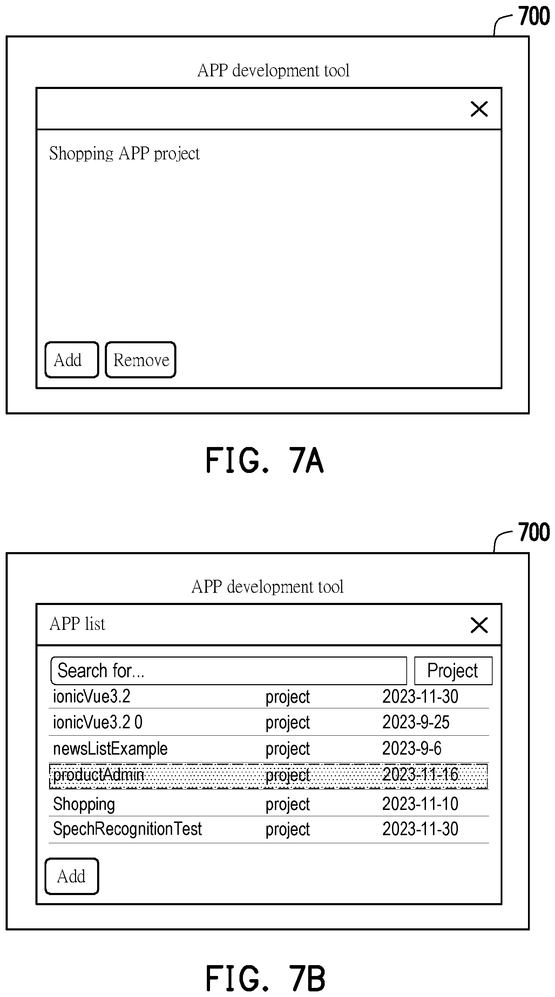

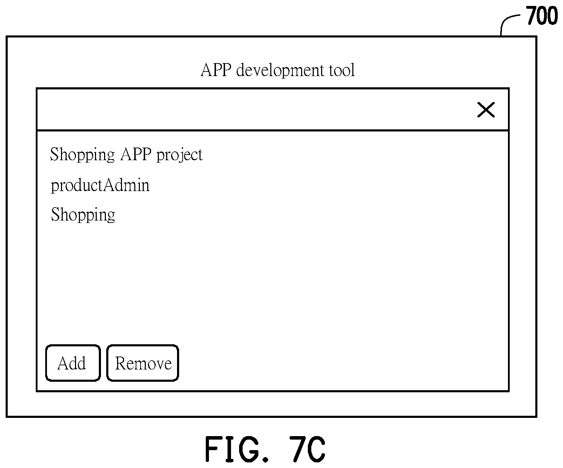

FIG. 7A, FIG. 7B, and FIG. 7C are schematic interface diagrams of an APP development tool according to an embodiment of the disclosure. In this embodiment, the APP development tool 700 is, for example, a codeless cross-APP web development tool. As shown in FIG. 7A, "Shopping APP project" may be selected as the main APP in the project menu of the APP development tool 700. Next, as shown in FIG. 7B, a project is selected as the slave APPs in the APP list of the APP development tool 700. Here, the projects listed in the APP list are APPs that are already created. After selecting the slave APPs, as shown in FIG. 7C, the name "Shopping APP Project" corresponding to the main APP and the names "productAdmin" and "shopping" corresponding to the slave APPs can be displayed in the file list.

A login function in a membership page is added and set to provide a backend management function after the login of a membership account has been successful. In an embodiment, the backend management function may be directly added to the main APP page (such as the membership page). In another embodiment, the backend management function may also be implemented in the manner of an APP (backend APP), and the backend APP is used as a slave APP in the super APP.

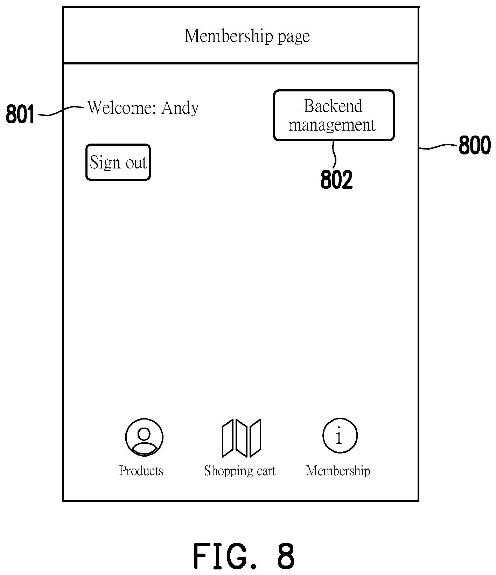

FIG. 8 is a schematic diagram of a membership page of a super APP according to an embodiment of the disclosure. Please refer to FIG. 8. After a user logs into the membership account in the super APP, the membership page 800 is displayed. The membership page includes a welcome line 801, such as "Welcome: Andy," and corresponds to a button 802 corresponding to the backend management function.

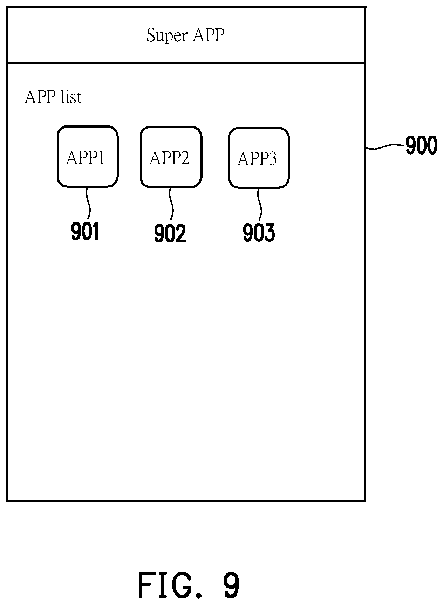

In addition, an object corresponding to each of the slave APPs may be further added to a designated page of the super APP 20 through the APP development tool, and the object may be associated with the directory path of the corresponding slave APP. The object is, for example, an icon, a function option, or a button. During the use of the super APP 20, the corresponding slave APPs may be triggered and executed through objects such as icons, function options, or buttons on the designated page. Accordingly, the use of the super APP is given more flexibility, and users may decide which slave APPs in the super APP to execute according to needs while executing the main APP of the super APP. For example, FIG. 9 is a schematic diagram of an APP list page of a super APP according to an embodiment of the disclosure. Referring to FIG. 9, the APP list page 900 displays icons 901, 902, and 903 corresponding to three APPs. This is an example to illustrate, and the disclosure is not limited thereto.

Alternatively, in other embodiments, the execution order of the slave APPs may be set during the building phase of the super APP without providing objects such as icons, function options or buttons.

In summary, in the disclosure, the method of building a super APP enables developers to easily construct and manage multiple APPs on a single platform while ensuring a high degree of interoperability of the APPs. In the development stage of the super APP, the users may easily build the super APP by just importing the existing APP. Moreover, the users may also integrate new functions into the super APP by creating a new APP according to needs.

## Claims

1. A computer-implemented method of building a super application, APP, (20, 600), adapted to utilize a processor to execute the method, the method comprising:
creating a first super APP through an APP development tool (700), wherein the first super APP (20) comprises a plurality of first APPs, and the plurality of first APPs comprise a main APP (200) and at least one slave APP (100-1, 100-2, 100-3), and creating the first super APP (20) comprises:
selecting the main APP (200) through the APP development tool (700);
**characterized in that** said method further comprises:
in response to the main APP (200) selected, creating an information transfer manager (240) and a background application programming interface, API, executor (250) in the main APP (200);
with the main APP (200) selected through the APP development tool (700), selecting the at least one slave APP (100-1, 100-2, 100-3) through the APP development tool (700);
creating a transmission path, in form of a directory path, between the main APP (200) and each of the slave APPs (100, 100-1, 100-2, 100-3) through the information transfer manager (240) so that the information transfer manager (240) stores data content transmitted respectively by the main APP (200) and each of the slave APPs (100-1, 100-2, 100-3) through the transmission path allowing the main APP (200) and each of the slave APPs (100-1, 100-2, 100-3) to read the data content in the transmission path, and
creating a call association between the main APP (200) and a background API executable master file (120-1, 120-2, 120-3) of each of the slave APPs (100-1, 100-2, 100-3) through the background API executor (250) of the main app (200), wherein the call association between the main APP (200) and the background API executable master file (120-1, 120-2, 120-3) allows the background API executor (250) of the main APP (200) to call the background API executable master file (120-1, 120-2, 120-3) of each of the slave APPs (100-1, 100-2, 100-3).

2. The method according to claim 1, wherein creating the transmission path between the main APP (200) and each of the slave APPs (100-1, 100-2, 100-3) through the information transfer manager (240) comprises:
creating a directory path (411-1, 411-2, 411-3) corresponding to each of the slave APPs (100-1, 100-2, 100-3) in the main APP (200) through the information transfer manager (240); and
storing each of the slave APPs (100-1, 100-2, 100-3) in the directory path (411-1, 411-2, 411-3) corresponding to each of the slave APPs (100-1, 100-2, 100-3), so that the information transfer manager (240) stores data content transmitted individually by the main APP (200) and each of the slave APPs (100-1, 100-2, 100-3) through the directory path (411-1, 411-2, 411-3), and allows the main APP (200) and each of the slave APPs (100-1, 100-2, 100-3) to read the data content stored in the directory path (411-1, 411-2, 411-3).

3. The method according to claim 2, wherein in a condition where the APP development tool (700) starts the main APP (200), after the APP development tool (700) selects the at least one slave APP (100-1, 100-2, 100-3), the method further comprising:
adding an object, preferably an icon, a function option or a button, corresponding to each of the slave APPs (100-1, 100-2, 100-3) to a designated page of a first super APP, and associating the object with the directory path (411-1, 411-2, 411-3) of each of the slave APPs (100-1, 100-2, 100-3).

4. The method according to any of the preceding claims, wherein in a condition where the APP development tool (700) selects the main APP (200), the method further comprising:
selecting a second super APP (600) through the APP development tool (700), wherein the second super APP (600) comprises a plurality of second APPs (601, 602), and one of the plurality of second APPs is a main APP (601) of the second super APP (600); and
importing the second super APP (600) into the first super APP (20), so that the plurality of second APPs (601, 602) comprised in the second super APP (600) become a slave APP (610, 620) of the first super APP (20), comprising:
creating a transmission path, in form of a directory path, between the main APP (200) of the first super APP (20) and each of the plurality of second APPs (610, 620) of the second super APP (600) through the information transfer manager (240) of the first super APP (20), so that the information transfer manager (240) stores data content transmitted respectively by the main APP (200) and each of the second APPs (610, 620) through the transmission path allowing the main APP (200) and each of the plurality of second APPs (610, 620) to read the data content in the transmission path; and
creating a call association between the main APP (200) of the first super APP (20) and a background API executable master file (610-2, 620-2) of each of the plurality of second APPs (610, 620) of the second super APP (600) through the background API executor (250) of the first super APP (20), wherein the call association between the main APP (200) and the background API executable master file (610-2, 620-2) allows the background API executor (250) of the main APP (200) to call the background API executable master file (610-2, 620-2) of each of the slave APPs (610, 620).

5. The method according to claim 4, wherein creating the transmission path between the main APP (200) of the first super APP (20) and each of the plurality of second APPs (610, 620) of the second super APP (600) through the information transfer manager (240) of the first super APP (20) comprises:
creating a directory path (611, 621) corresponding to each of the plurality of second APPs (610, 620) in the main APP (200) of the first super APP (20) through the information transfer manager (240); and
storing each of the plurality of second APPs (610, 620) in the directory path (611, 621) corresponding to each of the plurality of second APPs (610, 620).

6. The method according to any of the preceding claims, wherein the background API executor (250) is configured to call the background API executable master file (120, 120-1, 120-2, 120-3, 220, 610-2, 620-2) of each of the slave APPs (100, 100-1, 100-2, 100-3, 602, 610, 620).

7. The method according to any of the preceding claims, further comprising:
adding a backend management function to the first super APP through the APP development tool (700).

8. A computer program comprising program code means for carrying out the method according to any one of claims 1 to 7, when the program is executed on an electronic device.

9. A computer-readable data carrier comprising program code executable by an electronic device so that the electronic device executes a method according to any one of claims 1 to 7.

10. An electronic device having a processor and a data carrier, the processor being configured to execute the method according to any of claims 1 to 7.

## Patentansprüche

1. Computerimplementiertes Verfahren zum Erstellen einer Superanwendung, Super-APP, (20, 600),
die ausgelegt ist, einen Prozessor zu verwenden, um das Verfahren auszuführen, wobei das Verfahren umfasst:
Erzeugen einer ersten Super-APP durch ein APP-Entwicklungswerkzeug (700), wobei die erste Super-APP (20) mehrere erste APPs umfasst und die mehreren ersten APPs eine Haupt-APP (200) und mindestens eine Slave-APP (100-1, 100-2, 100-3) umfassen und das Erzeugen der ersten Super-APP (20) umfasst:
Auswählen der Haupt-APP (200) durch das APP-Entwicklungswerkzeug (700);
**dadurch gekennzeichnet, dass** das Verfahren ferner umfasst:
als Reaktion darauf, dass die Haupt-APP (200) ausgewählt wird, Erzeugen eines Informationstransfermanagers (240) und eines Hintergrundanwendungs-Programmierschnittstellen-Executors, API-Executors, (250) in der Haupt-APP (200);
wobei die Haupt-APP (200), die durch das APP-Entwicklungswerkzeug (700) ausgewählt wird, die mindestens eine Slave-APP (100-1, 100-2, 100-3) durch das APP-Entwicklungswerkzeug (700) auswählt;
Erzeugen eines Übertragungswegs in Form eines Verzeichnispfads zwischen der Haupt-APP (200) und jeder der Slave-APPs (100, 100-1, 100-2, 100-3) durch den Informationstransfermanager (240), so dass der Informationstransfermanager (240) Dateninhalt speichert, der jeweils durch die Haupt-APP (200) und jede der Slave-APPs (100-1, 100-2, 100-3) über den Übertragungsweg übertragen wird, was der Haupt-APP (200) und jeder der Slave-APPs (100-1, 100-2, 100-3) erlaubt, den Dateninhalt auf dem Übertragungsweg zu lesen, und
Erzeugen einer Aufrufzuordnung zwischen der Haupt-APP (200) und einer ausführbaren Hintergrund-API-Hauptdatei (120-1, 120-2, 120-3) jeder der Slave-APPs (100-1, 100-2, 100-3) durch den Hintergrund-API-Executor (250) der Haupt-Anwendung (200), wobei die Aufrufzuordnung zwischen der Haupt-APP (200) und der ausführbaren Hintergrund-API-Hauptdatei (120-1, 120-2, 120-3) dem Hintergrund-API-Executor (250) der Haupt-APP (200) erlaubt, die ausführbare Hintergrund-API-Hauptdatei (120-1, 120-2, 120-3) jeder der Slave-APPs (100-1, 100-2, 100-3) aufzurufen.

2. Verfahren nach Anspruch 1, wobei das Erzeugen des Übertragungswegs zwischen der Haupt-APP (200) und jeder der Slave-APPs (100-1, 100-2, 100-3) durch den Informationstransfermanager (240) umfasst:
Erzeugen eines Verzeichnispfads (411-1, 411-2, 411-3), der jeder der Slave-APPs (100-1, 100-2, 100-3) in der Haupt-APP (200) entspricht, durch den Informationstransfermanager (240); und
Speichern jeder der Slave-APPs (100-1, 100-2, 100-3) in dem Verzeichnisweg (411-1, 411-2, 411-3), der jeder der Slave-APPs (100-1, 100-2, 100-3) entspricht, so dass der Informationstransfermanager (240) Dateninhalt speichert, der individuell durch die Haupt-APP (200) und jede der Slave-APPs (100-1, 100-2, 100-3) durch den Verzeichnispfad (411-1, 411-2, 411-3) übertragen wird, und der Haupt-APP (200) und jeder der Slave-APPs (100-1, 100-2, 100-3) erlaubt, den in dem Verzeichnispfad (411-1, 411-2, 411-3) gespeicherten Dateninhalt zu lesen.

3. Verfahren nach Anspruch 2, wobei unter der Bedingung, dass das APP-Entwicklungswerkzeug (700) die Haupt-APP (200) startet, nachdem das APP-Entwicklungswerkzeug (700) die mindestens eine Slave-APP (100-1, 100-2, 100-3) auswählt, das Verfahren ferner umfasst:
Hinzufügen eines Objekts, vorzugsweise eines Piktogramms, einer Funktionsoption oder einer Taste, die jeder der Slave-APPs (100-1, 100-2, 100-3) entspricht, zu einer designierten Seite einer ersten Super-APP und Zuordnen des Objekts zu dem Verzeichnispfad (411-1, 411-2, 411-3) jeder der Slave-APPs (100-1, 100-2, 100-3).

4. Verfahren nach einem der vorhergehenden Ansprüche, wobei unter der Bedingung, dass das APP-Entwicklungswerkzeug (700) die Haupt-APP (200) auswählt, das Verfahren ferner umfasst:
Auswählen einer zweiten Super-APP (600) durch das App-Entwicklungswerkzeug (700), wobei die zweite Super-APP (600) mehrere zweite APPs (601, 602) umfasst und eine der mehreren zweiten APPs eine Haupt-APP (601) der zweiten Super-APP (600) ist; und
Importieren der zweiten Super-APP (600) in die erste Super-APP (20), so dass die mehreren zweiten APPs (601, 602), die in der zweiten Super-APP (600) enthalten sind, eine Slave-APP (610, 620) der ersten Super-APP (20) werden, das umfasst:
Erzeugen eines Übertragungswegs in Form eines Verzeichnispfads zwischen der Haupt-APP (200) der ersten Super-APP (20) und jeder der mehreren zweiten APPs (610, 620) der zweiten Super-APP (600) durch den Informationstransfermanager (240) der ersten Super-APP (20), so dass der Informationstransfermanager (240) Dateninhalt speichert, der jeweils durch die Haupt-APP (200) und jede der zweiten APPs (610. 620) über den Übertragungsweg übertragen wird, was der Haupt-APP (200) und jeder der mehreren zweiten APPs (610, 620) erlaubt, den Dateninhalt auf dem Übertragungsweg zu lesen; und
Erzeugen einer Aufrufzuordnung zwischen der Haupt-APP (200) der ersten Super-APP (20) und einer ausführbaren Hintergrund-API-Hauptdatei (610-2, 620-2) jeder der mehreren zweiten APPs (610, 620) der zweiten Super-APP (600) durch den Hintergrund-API-Executor (250) der ersten Super-APP (20), wobei die Aufrufzuordnung zwischen der Haupt-APP (200) und der ausführbaren Hintergrund-API-Hauptdatei (610-2, 620-2) dem Hintergrund-API-Executor (250) der Haupt-APP (200) erlaubt, die ausführbare Hintergrund-API-Hauptdatei (610-2, 620-2) jeder der Slave-APPs (610, 620) aufzurufen.

5. Verfahren nach Anspruch 4, wobei das Erzeugen des Übertragungswegs zwischen der Haupt-APP (200) der ersten Super-APP (20) und jeder der mehreren zweiten APPs (610, 620) der zweiten Super-APP (600) durch den Informationstransfermanager (240) der ersten Super-APP (20) umfasst:
Erzeugen eines Verzeichnispfads (611, 621), der jeder der mehreren zweiten APPs (610, 620) in der Haupt-APP (200) der ersten Super-APP (20) entspricht, durch den Informationstransfermanager (240); und
Speichern jeder der mehreren zweiten APPs (610, 620) in dem Verzeichnispfad (611, 621), der jeder der mehreren zweiten APPs (610, 620) entspricht.

6. Verfahren nach einem der vorhergehenden Ansprüche, wobei der Hintergrund-API-Executor (250) konfiguriert ist, die ausführbare Hintergrund-API-Hauptdatei (120, 120-1, 120-2, 120-3, 220, 610-2, 620-2) jeder der Slave-APPs (100, 100-1, 100-2, 100-3, 602, 610, 620) aufzurufen.

7. Verfahren nach einem der vorhergehenden Ansprüche, das ferner umfasst:
Hinzufügen einer Backend-Managementfunktion zu der ersten Super-APP durch das APP-Entwicklungswerkzeug (700).

8. Computerprogramm, das Programmcodemittel umfasst, um das Verfahren nach einem der Ansprüche 1 bis 7 auszuführen, wenn das Programm auf einer elektronischen Vorrichtung ausgeführt wird.

9. Computerlesbarer Datenträger, der Programmcode umfasst, der durch eine elektronische Vorrichtung ausführbar ist, so dass die elektronische Vorrichtung ein Verfahren nach einem der Ansprüche 1 bis 7 ausführt.

10. Elektronische Vorrichtung mit einem Prozessor und einem Datenträger, wobei der Prozessor konfiguriert ist, das Verfahren nach einem der Ansprüche 1 bis 7 auszuführen.

## Revendications

1. Procédé mis en œuvre par ordinateur pour construire une super application, APP, (20, 600), adaptée pour utiliser un processeur afin d'exécuter le procédé, le procédé comportant les étapes consistant à :
créer une première super APP via un outil de développement d'APP (700), dans lequel la première super APP (20) comporte une pluralité de premières APP, et les APP de la pluralité de premières APP comportent une APP principale (200) et au moins une APP esclave (100-1, 100-2, 100-3), et la création de la première super APP (20) comporte de :
sélectionner l'APP principale (200) via l'outil de développement d'APP (700) ;
**caractérisé en ce que** ledit procédé comporte en outre de :
en réponse à l'APP principale (200) sélectionnée, créer un gestionnaire de transfert d'informations (240) et un exécuteur d'interface de programmation d'application, API, d'arrière-plan (250) dans l'APP principale (200) ;
avec l'APP principale (200) sélectionnée via l'outil de développement d'APP (700), sélectionner la au moins une APP esclave (100-1, 100-2, 100-3) via l'outil de développement d'APP (700) ;
créer un trajet de transmission, sous la forme d'un trajet inter-répertoires, entre l'APP principale (200) et chacune des APP esclaves (100, 100-1, 100-2, 100-3) via le gestionnaire de transfert d'informations (240) de sorte que le gestionnaire de transfert d'informations (240) stocke un contenu de données transmis respectivement par l'APP principale (200) et chacune des APP esclaves (100-1, 100-2, 100-3) via le trajet de transmission permettant à l'APP principale (200) et à chacune des APP esclaves (100-1, 100-2, 100-3) de lire le contenu de données dans le trajet de transmission, et
créer une association d'appel entre l'APP principale (200) et un fichier maître exécutable par une API d'arrière-plan (120-1, 120-2, 120-3) de chacune des APP esclaves (100-1, 100-2, 100-3) via l'exécuteur d'API d'arrière-plan (250) de l'APP principale (200), dans lequel l'association d'appel entre l'APP principale (200) et le fichier maître exécutable par une API d'arrière-plan (120-1, 120-2, 120-3) permet à l'exécuteur d'API d'arrière-plan (250) de l'APP principale (200) d'appeler le fichier maître exécutable par une API d'arrière-plan (100-1, 100-2, 100-3) de chacune des APP esclaves (100-1, 100-2, 100-3).

2. Procédé selon la revendication 1, dans lequel la création du trajet de transmission entre l'APP principale (200) et chacune des APP esclaves (100-1, 100-2, 100-3) via le gestionnaire de transfert d'informations (240) comporte de :
créer un trajet de répertoire (411-1, 411-2, 411-3) correspondant à chacune des APP esclaves (100-1, 100-2, 100-3) dans l'APP principale (200) via le gestionnaire de transfert d'informations (240) ; et
stocker chacune des APP esclaves (100-1, 100-2, 100-3) dans le trajet inter-répertoires (411-1, 411-2, 411-3) correspondant à chacune des APP esclaves (100-1, 100-2, 100-3), de sorte que le gestionnaire de transfert d'informations (240) stocke un contenu de données transmis individuellement par l'APP principale (200) et chacune des APP esclaves (100-1, 100-2, 100-3) via le trajet inter-répertoires (411-1, 411-2, 411-3), et permet à l'APP principale (200) et à chacune des APP esclaves (100-1, 100-2, 100-3) de lire le contenu de données stocké dans le trajet inter-répertoires (411-1, 411-2, 411-3).

3. Procédé selon la revendication 2, dans lequel, dans une condition où l'outil de développement d'APP (700) lance l'APP principale (200), après que l'outil de développement d'APP (700) a sélectionné la au moins une APP esclave (100-1, 100-2, 100-3), le procédé comporte outre de :
ajouter un objet, de préférence une icône, une option de fonction ou un bouton, correspondant à chacune des APP esclaves (100-1, 100-2, 100-3) à une page désignée d'une première super APP, et associer l'objet au trajet inter-répertoires (411-1, 411-2, 411-3) de chacune des APP esclaves (100-1, 100-2, 100-3).

4. Procédé selon l'une quelconque des revendications précédentes, dans lequel, dans une condition où l'outil de développement d'APP (700) sélectionne l'APP principale (200), le procédé comporte en outre de :
sélectionner une seconde super APP (600) via l'outil de développement d'APP (700), dans lequel la seconde super APP (600) comporte une pluralité de secondes APP (601, 602), et une APP de la pluralité de secondes APP est une APP principale (601) de la seconde super APP (600) ; et
importer la seconde super APP (600) dans la première super APP (20), de sorte que les APP de la pluralité de secondes APP (601, 602) comprises dans la seconde super APP (600) deviennent une APP esclave (610, 620) de la première super APP (20), comportant de :
créer un trajet de transmission, sous la forme d'un trajet inter-répertoires, entre l'APP principale (200) de la première super APP (20) et chaque APP de la pluralité de secondes APP (610, 620) de la seconde super APP (600) via le gestionnaire de transfert d'informations (240) de la première super APP (20), de sorte que le gestionnaire de transfert d'informations (240) stocke un contenu de données transmis respectivement par l'APP principale (200) et chacune des secondes APP (610, 620) via le trajet de transmission, permettant à l'APP principale (200) et à chaque APP de la pluralité de secondes APP (610, 620) de lire le contenu de données dans le trajet de transmission ; et
créer une association d'appel entre l'APP principale (200) de la première super APP (20) et un fichier maître exécutable par un API d'arrière-plan (610-2, 620-2) de chaque APP de la pluralité de secondes APP (610, 620) de la seconde super APP (600) via l'exécuteur d'API d'arrière-plan (250) de la première super APP (20), dans lequel l'association d'appel entre l'APP principale (200) et le fichier maître exécutable par une API d'arrière-plan (610-2, 620-2) permet à l'exécuteur d'API d'arrière-plan (250) de l'APP principale (200) d'appeler le fichier maître exécutable par une API d'arrière-plan (610-2, 620-2) de chacune des APP esclaves (610, 620).

5. Procédé selon la revendication 4, dans lequel la création du trajet de transmission entre l'APP principale (200) de la première super APP (20) et chacune APP de la pluralité de secondes APP (610, 620) de la seconde super APP (600) via le gestionnaire de transfert d'informations (240) de la première super APP (20) comporte de :
créer un trajet inter-répertoires (611, 621) correspondant à chaque APP de la pluralité de secondes APP (610, 620) dans l'APP principale (200) de la première super APP (20) via le gestionnaire de transfert d'informations (240) ; et
stocker chaque APP de la pluralité de secondes APP (610, 620) dans le trajet inter-répertoires (611, 621) correspondant à chaque APP de la pluralité de secondes APP (610, 620).

6. Procédé selon l'une quelconque des revendications précédentes, dans lequel l'exécuteur d'API d'arrière-plan (250) est configuré pour appeler le fichier maître exécutable par une API d'arrière-plan (120, 120-1, 120-2, 120-3, 220, 610-2, 620-2) de chacune des APP esclaves (100, 100-1, 100-2, 100-3, 602, 610, 620).

7. Procédé selon l'une quelconque des revendications précédentes, comportant en outre de :
ajouter une fonction de gestion d'arrière-plan à la première super APP via l'outil de développement d'APP (700).

8. Programme informatique comportant des moyens de code de programme pour mettre en œuvre le procédé selon l'une quelconque des revendications 1 à 7, lorsque le programme est exécuté sur un dispositif électronique.

9. Support de données lisible par ordinateur comportant un code de programme exécutable par un dispositif électronique de sorte que le dispositif électronique exécute un procédé selon l'une quelconque des revendications 1 à 7.

10. Dispositif électronique ayant un processeur et un support de données, le processeur étant configuré pour exécuter le procédé selon l'une quelconque des revendications 1 à 7.
